Europäisches Patentamt

European Patent Office

Office européen des brevets

(19)

(11) EP 0 818 751 A1

(12) EUROPEAN PATENT APPLICATION

(43) Date of publication:
14.01.1998 Bulletin 1998/03

(51) Int Cl.⁶: G06K 11/16

(21) Application number: 97304153.6

(22) Date of filing: 13.06.1997

(84) Designated Contracting States:
AT BE CH DE DK ES FI FR GB GR IE IT LI LU MC NL PT SE
Designated Extension States:
AL LT LV SI

(30) Priority: 12.07.1996 US 679170

(71) Applicant: SYNAPTICS, INCORPORATED
San Jose, California 95134 (US)

(72) Inventors:
• Pritchard, Jeffrey O.
San Francisco, CA 94114 (US)

• Allen, Timothy P.
Los Gatos, CA 95030 (US)
• Gillespie, David W.
Palo Alto, CA 94306 (US)
• Leroy, Lieven P.
Sunnyvale, CA 94086 (US)

(74) Representative: Leeming, John Gerard
J.A. Kemp & Co.,
14 South Square,
Gray's Inn
London WC1R 5LX (GB)

(54) **Object position detector with noise suppression feature**

(57) A method for suppressing noise in a touchpad cursor control device which operates by scanning at one of a plurality of scanning frequencies a number of inputs associated with a touchpad, comprises the steps of measuring the noise level at each one of said plurality of scanning frequencies and setting the scanning frequency of the touchpad cursor control device to the one of the plurality of scanning frequencies having the lowest noise level.

FIG. 14

**Description**

The present invention relates to cursor control devices. More particularly, the present invention relates to a capacitive touch sensor system with a noise suppression feature and to methods of noise suppression for capacitive touch sensor systems.

The capacitive sensor on currently-available capacitive touchpads works by forcing a current through or voltage on to a capacitive sensor, and measuring the resulting voltage. A finger on or near this sensor adds capacitance and changes the voltage measured. Since the finger is in no other way electrically connected to the touchpad, the finger and the touchpad share no common voltage reference and the finger's voltage relative to the touchpad is free to vary. This distorts the voltage measured by the touchpad sensor system.

Previous touchpad technology has accepted this problem and solved it for some voltage noise sources. The most common noise source in the United States is that the human finger voltage couples to electrical wiring and varies at 60Hz while the ground of the touchpad sensor system remains constant. One method of avoiding 60 Hz and related noise is to sample many results at high sampling frequencies. Use of high sampling frequencies averages out the result of any finger noise at frequencies less than one half the sampling frequency. Another method for noise cancellation, disclosed in United States patent No. 5,374,787 cancels out low frequency noise by sampling when currents drive the voltage low, sampling when currents drive the voltage high and then combining these results to cancel out a noise offset.

Both these technologies are inadequate for noise reduction of specific highfrequency noise. At noise frequencies near the sampling frequency, the noise will couple with the sampling frequency and distort results.

In the extreme case, electrical noise unacceptably distorts sampling results even in the system described in United States patent No. 5,374,787. Assume that the initial sample period gets driven low by the noise and that the second sample period gets driven high by the noise. The combination of the two results adds the two noise components instead of canceling them out. If the noise is periodic and very close to the sampling frequency, a low-frequency aliasing or beat pattern will arise in the measured data which can masquerade as finger motion.

The most common approach to noise reduction is filtering (insulating the circuit or mechanism from the noise source). However, in the case of the capacitive touchpad system, it is impossible to shield the touchpad from all environmental dangers or to ground the user to the pad, thus rendering this option impractical.

There thus exists a need for a system and method for minimizing the effects of noise on capacitive touchpad sensors.

It is therefore an object of the present invention to provide a capacitive touchpad sensor with improved noise immunity over prior art capacitive touchpad sensors.

According to a first aspect of the present invention, a method for suppressing noise in a touchpad cursor control device which operates by scanning at one of a plurality of scanning frequencies a number of inputs associated with a touchpad, comprising the steps of: measuring the noise level at each one of the plurality of scanning frequencies; and setting the scanning frequency of the touchpad cursor control device to the one of the plurality of scanning frequencies having the lowest noise level. In a further refinement of the present invention, the further steps of determining when a finger or other conductive object is in contact with the touchpad; and inhibiting changing the scanning frequency when the finger or other conductive object is in contact with the touchpad are performed. The inhibiting of changing the scanning frequency may be performed for a period of time after the finger or other conductive object has broken contact with the touchpad, the period of time being sufficient to allow completion of any one of a set of gestures.

According to a second aspect of the present invention apparatus for suppressing noise in a touchpad cursor control device which operates by scanning at one of a plurality of scanning frequencies a number of inputs associated with a touchpad, comprises circuitry for measuring the noise level at each one of the plurality of scanning frequencies and circuitry for setting the scanning frequency of the touchpad cursor control device to the one of the plurality of scanning frequencies having the lowest noise level. Circuitry for determining when a finger or other conductive object is in contact with the touchpad and for inhibiting changing the scanning frequency when the finger or other conductive object is in contact with the touchpad may be included. The inhibiting of changing the scanning frequency may be performed for a period of time after the finger or other conductive object has broken contact with the touch pad, the period of time being sufficient to allow completion of any one of a set of gestures.

The present invention will be described below with reference to an exemplary embodiment and the accompanying drawings, in which:

FIG. 1 is an overall block diagram of an illustrative capacitive touchpad position sensing system with which the noise suppression feature of the present invention may be employed.

FIG. 2a is a top view of a capacitive object position sensor transducer according to a presently preferred embodiment of the invention showing the object position sensor surface layer including a top conductive trace layer and conductive pads connected to a bottom trace layer.

FIG. 2b is a bottom view of the object position sensor transducer of FIG. 2a showing the bottom conductive trace layer.

FIG. 2c is a composite view of the object position sensor transducer of FIGS. 2a and 2b showing both the top and bottom conductive trace layers.

FIG. 2d is a cross-sectional view of the object position sensor transducer of FIGS. 2a-2c.

FIG. 3 is a block diagram of sensor decoding electronics which may be used with the sensor transducer in accordance with a preferred embodiment of the present invention.

FIG. 4a is a simplified schematic diagram of a charge integrator circuit which may be used in the present invention.

FIG. 4b is an illustrative schematic diagram of the charge integrator circuit of FIG. 4a.

FIG. 5 is a timing diagram of the operation of charge integrator circuit of FIGS. 4a and 4b.

FIG. 6 is a schematic diagram of an illustrative filter and sample/hold circuit for use in the present invention.

FIG. 7 is a more detailed block diagram of a presently preferred arrangement of A/D converters for use in the present invention.

FIG. 8 is a block diagram of an illustrative arithmetic unit which may be used in the present invention.

FIG. 9 is a block diagram of a calibration unit which may be used with the arithmetic unit of FIG. 8.

FIG. 10 is a schematic diagram of a bias voltage generating circuit useful in the present invention.

FIG. 11a is a diagram showing a touchpad like that of FIG. 1 with a proximately-located finger.

FIG. 11b is a diagram showing the electrical equivalent circuit of FIG. 11a, assuming a finger near the touchpad with the finger and the touchpad sharing a common ground.

Fig. 12 is a diagram showing the electrical equivalent circuit when the finger voltage varies relative to touchpad ground to illustrate.the problem solved by the present invention.

FIG. 13 is a set of waveforms which show another aspect of the susceptibility of capacitor touchpad systems to finger noise.

FIG. 14 is a flow diagram illustrating the frequency selection process according to the present invention.

FIG. 15 is a schematic diagram illustrating the use of a capacitor to shift the scanning frequency of a capacitive touchpad sensor system according to the present invention.

FIG. 16 is a schematic diagram of a circuit for implementing the present invention.

The present invention provides unique features not previously available. These improvements provide a more easily integrated solution, increased sensitivity, and greater noise rejection, increased data acquisition rate and decreased power consumption. The present invention allows for continuous self calibration to subtract out the effects of environmental changes and allows for enhanced cursor control from edge motion on a sensing plane.

Those of ordinary skill in the art will realize that the following description of the present invention is illustrative only and not in any way limiting. Other embodiments of the invention will readily suggest themselves to such skilled persons.

The present invention brings together in combination a number of unique features which allow for new applications not before possible. Because the object position sensor of the present invention has very low power requirements, it is beneficial for use in battery operated or low power applications such as lap top or portable computers . It is also a very low cost solution, has no moving parts (and is therefore virtually maintenance free), and uses the existing printed circuit board traces for sensors. The sensing technology of the present invention can be integrated into a computer motherboard to even further lower its cost in computer applications. Similarly, in other applications the sensor can be part of an already existent circuit board.

Because of its small size and low profile, the sensor technology of the present invention is useful in lap top or portable applications where volume is an important consideration. The sensor technology of the present invention requires circuit board space for only a single sensor interface chip that can interface directly to a microprocessor, plus the area needed on the printed circuit board for sensing.

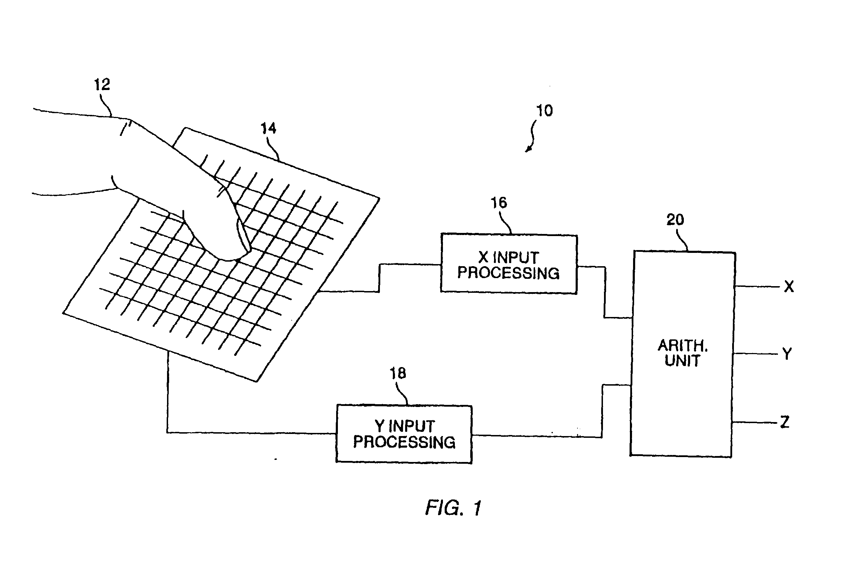

Referring first to FIG. 1, a simplified block diagram of the capacitive position sensing system 6 of the present invention is presented. Capacitive position sensing system 6 can accurately determine the position of a finger 8 or other conductive object proximate to or touching a sensing plane 10. The capacitance of a plurality of conductive lines running in a first direction (e.g., "X") is sensed by X input processing circuitry 12 and the capacitance of a plurality of conductive lines running in a second direction (e.g., "Y") is sensed by Y input processing circuitry 14. The sensed capacitance values are digitized in both X input processing circuitry 12 and Y input processing circuitry 14. The outputs of X input processing circuitry 12 and Y input processing circuitry 14 are presented to arithmetic unit 16, which uses the digital information to derive digital information representing the position and pressure of the finger 8 or other conductive object relative to the sensing plane 10.

The X, Y, and Z outputs of arithmetic unit 16 are directed to motion unit 18 which provides the cursor motion direction signals to the host computer. Those of ordinary skill in the art will recognize, that as used herein, "host" may mean a stand-alone computer such as an IBM or compatible PC or computer made by Apple Computers, hand-held control units, personal digital assistants, remote communication devices, or the like, or to any other devices or systems which can take as input the output of a touch tablet.

The X, Y, and Z outputs of arithmetic unit 16 are also directed to gesture unit 20, which is used to recognize certain finger gestures performed by a user on sensing plane 10. In addition, gesture unit 20 may produce a signal to motion unit 18 to enable the edge motion feature of the present invention based on the state of gesture processing.

The sensor material can be anything that allows creation of a conductive X/Y matrix of pads. This includes not only standard PC boards, but also includes but is not limited to flexible PC boards, conductive elastomer materials, silk-screened conductive lines, and piezo-electric Kynar plastic materials. This renders it useful as well in any portable equipment application or in human interface where the sensor needs to be molded to fit within the hand.

The sensor can be conformed to any three dimensional surface. Copper can be plated in two layers on most any surface contour producing the sensor. This will allow the sensor to be adapted to the best ergonomic form needed for any particular application. This coupled with the "light-touch" feature will make it effortless to use in many applications. The sensor can also be used in an indirect manner, i.e it can have an insulating foam material covered by a conductive layer over the touch sensing surface and be used to detect any object (not just conductive) that presses against it's surface.

Small sensor areas are practical, i.e., a presently conceived embodiment takes about 1.5"x 1.5" of area, however those of ordinary skill in the art will recognize that the area is scaleable for different applications. The matrix area is scaleable by either varying the matrix trace spacing or by varying the number of traces. Large sensor areas are practical where more information is needed.

Besides simple X and Y position information, the sensor technology of the present invention also provides finger pressure information. This additional dimension of information may be used by programs to control special features such as "brush-width" modes in Paint programs, special menu accesses, etc., allowing provision of a more natural sensory input to computers. It has also been found useful for implementing "mouse click and drag" modes and for simple input gestures.

The user will not even have to touch the surface to generate the minimum reaction. This feature can greatly minimize user strain and allow for more flexible use.

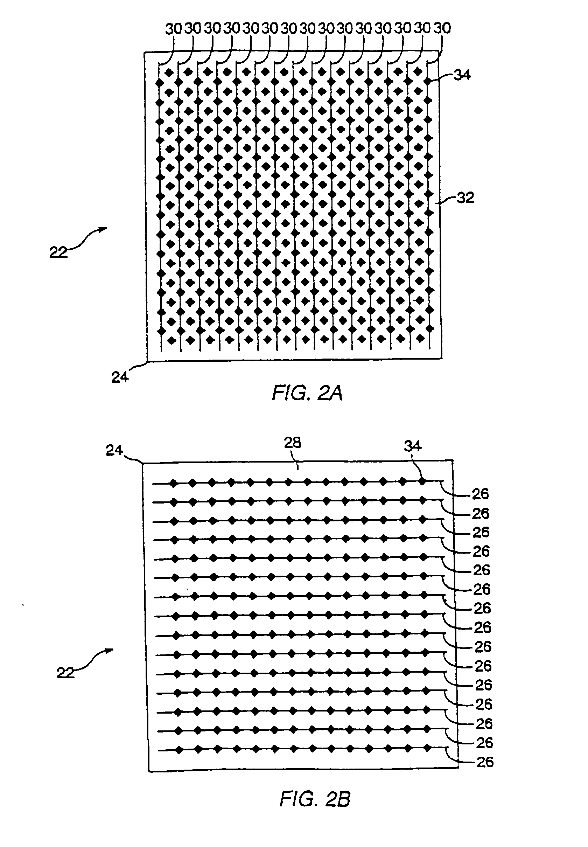

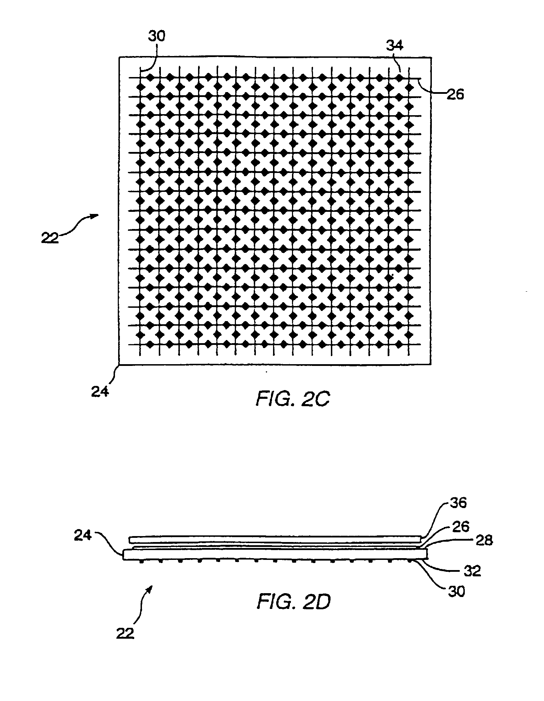

The sense system of the present invention depends on a transducer device capable of providing position and pressure information regarding the object contacting the transducer. Referring now to FIGS. 2a-2d, top, bottom, composite, and cross-sectional views, respectively, are shown of a presently-preferred sensing plane 10 comprising a touch sensor array 22 for use in the present invention. Since capacitance is exploited by this embodiment of the present invention, the surface of touch sensor array 22 is designed to maximize the capacitive coupling to a finger or other conductive object.

A presently preferred touch sensor array 22 according to the present invention comprises a substrate 24 including a set of first conductive traces 26 disposed on a top surface 28 thereof and run in a first direction to comprise row positions of the array. A second set of conductive traces 30 are disposed on a bottom surface 32 thereof and run in a second direction preferably orthogonal to the first direction to form the column positions of the array. The top and bottom conductive traces 26 and 30 are alternately in contact with periodic sense pads 34 comprising enlarged areas, shown as diamonds in FIGS. 2a-2c. While sense pads 34 are shown as diamonds in FIGS. 2a-2c, any shape, such as circles, which allows them to be closely packed is equivalent for purposes of this invention. As an arbitrary convention herein, the first conductive traces 26 will be referred to as being oriented in the "X" or "row" direction and may be referred to herein sometimes as "X lines" and the second conductive traces 30 will be referred to as being oriented in the "Y" or "column" direction and may be referred to herein sometimes as "Y lines".

The number and spacing of these sense pads 34 depends upon the resolution desired. For example, in an actual embodiment constructed according to the principles of the present invention, a 0.10 inch center-to-center diamond-shaped pattern of conductive pads disposed along a matrix of 15 rows and 15 columns of conductors is employed. Every other sense pad 34 in each direction in the pad pattern is connected to conductive traces on the top and bottom surfaces 28 and 32, respectively of substrate 24.

Substrate 24 may be a printed circuit board, a flexible circuit board or any of a number of available circuit interconnect technology structures. Its thickness is unimportant as long as contact may be made therethrough from the bottom conductive traces 30 to their sense pads 34 on the top surface 28. The printed circuit board comprising substrate 24 can be constructed using standard industry techniques. Board thickness is not important. Connections from the conductive pads 34 to the bottom traces 30 may be made employing standard plated-through hole techniques well known in the printed circuit board art.

In an alternate embodiment of the present invention, the substrate material 24 may have a thickness on the order of 0.005 to 0.010 inches. Then the diamonds on the upper surface 28 and the plated through holes that connect to the lower surface traces 30, can be omitted, further reducing the cost of the system.

An insulating layer 36 is disposed over the sense pads 34 on top surface 28 to insulate a human finger or other object therefrom. Insulating layer 36 is preferably a thin layer (i.e., approximately 5 mils) to keep capacitive coupling large and may comprise a material, such as mylar, chosen for its protective and ergonomic characteristics. The term "significant capacitive coupling" as used herein shall mean capacitive coupling having a magnitude greater than about 0.5 pF.

There are two different capacitive effects taking place when a finger approaches the touch sensor array 22. The first capacitive effect is trans-capacitance, or coupling between sense pads 34, and the second capacitive effect is self-capacitance, or coupling to virtual ground. Sensing circuitry is coupled to the sensor array 22 of the present invention and responds to changes in either or both of these capacitances. This is important because the relative sizes of the two capacitances change greatly depending on the user environment. The ability of the present invention to detect changes in both self capacitance and trans-capacitance results in a very versatile system having a wide range of applications.

According to the preferred embodiment of the invention, a position sensor system including touch sensor array 22 and associated position detection circuitry will detect a finger position on a matrix of printed circuit board traces via the capacitive effect of finger proximity to the sensor array 22. The position sensor system will report the X, Y position of a finger placed near the sensor array 22 to much finer resolution than the spacing between the row and column traces 26 and 30. The position sensor according to this embodiment of the invention will also report a Z value proportional to the outline of that finger and hence indicative of the pressure with which the finger contacts the surface of insulating layer 36 over the sensing array 22.

According to the presently preferred embodiment of the invention, a very sensitive, light-touch detector circuit may be provided using adaptive analog and digital VLSI techniques. The circuit of the present invention is very robust and calibrates out process and systematic errors. The detector circuit of the present invention will process the capacitive input information and provide digital information which may be presented directly to a microprocessor.

According to this embodiment of the invention, sensing circuitry is contained on a single sensor processor integrated circuit chip. The sensor processor chip can have any number of X and Y "matrix" inputs. The number of X and Y inputs does not have to be equal. The Integrated circuit has a digital bus as output. In the illustrative example disclosed in FIGS. 2a-2d herein, the sensor array has 15 traces in both the X and Y directions. The sensor processor chip thus has 15 X inputs and 15 Y inputs. An actual embodiment constructed according to the principles of the present invention employed 18 traces in the X direction and 24 traces in the Y direction. Those of ordinary skill in the art will recognize that the size of the sensing matrix which may be employed in the present invention is arbitrary and will be dictated largely by design choice.

The X and Y matrix nodes are driven and sensed in parallel, with the capacitive information from each line indicating how close a finger is to that node. The scanned information provides a profile of the finger proximity in each dimension. According to this aspect of the present invention, the profile centroid is derived in both the X and Y directions and is the position in that dimension. The profile curve of proximity is also integrated to provide the Z information.

There are two drive and sense methods employed in the touch sensing technology of the present invention. According to a first and presently preferred embodiment of the invention, the voltages on all of the X lines of the sensor matrix are simultaneously moved, while the voltages of the Y lines are held at a constant voltage. Next, the voltages on all of the Y lines of the sensor matrix are simultaneously moved, while the voltages of the X lines are held at a constant voltage. This scanning method accentuates the measurement of capacitance to virtual ground provided by the finger. Those of ordinary skill in the art will recognize that order of these two steps is somewhat arbitrary and may be reversed.

According to a second drive/sense method, the voltages on all of the X lines of the sensor matrix are simultaneously moved in a positive direction, while the voltages of the Y lines are moved in a negative direction. Next, the voltages on all of the X lines of the sensor matrix are simultaneously moved in a negative direction, while the voltages of the Y lines are moved in a positive direction. This second drive/sense method accentuates transcapacitance and de-emphasizes virtual ground capacitance. As with the first drive/sense method, those of ordinary skill in the art will recognize that order of these two steps is somewhat arbitrary and may be reversed.

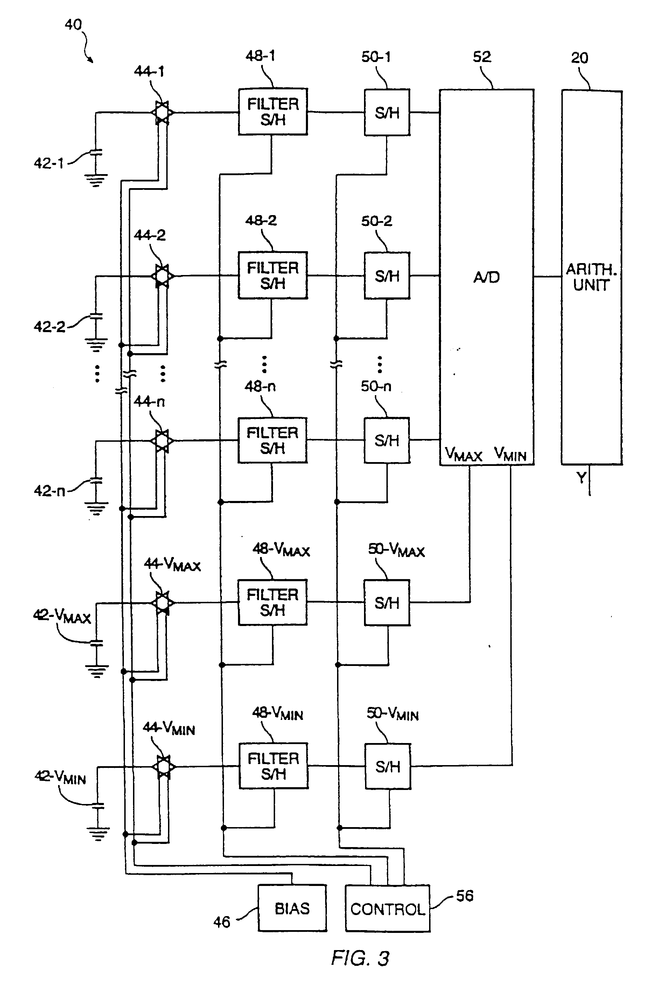

Referring now to FIG. 3, a block diagram of the presently preferred sensing circuitry 40 for use according to the present invention is presented. This block diagram, and the accompanying disclosure, relates to the sensing circuitry in one dimension (X) only, and includes the X input processing circuitry 12 of FIG. 1. Those of ordinary skill in the art will appreciate that an identical circuit would be used for sensing the opposite (Y) dimension and would include the Y input processing circuitry 14 of FIG. 1. Such skilled persons will further note that the two dimensions do not need to be orthogonal to one another. For example, they can be radial or of any other nature to match the contour of the touch sensor array and other needs of the system. Those of ordinary skill in the art will recognize that the technology disclosed herein could be applied as well to a one-dimensional case where only one set of conductive traces is used.

The capacitance at each sensor matrix node is represented by equivalent capacitors 42-1 through 42-n. The capacitance of capacitors 42-1 through 42-n comprises the capacitance of the matrix conductors and has a characteristic background value when no object (e.g., a finger) is proximate to the sensing plane of the sensor matrix. As an object approaches the sensing plane the capacitance of capacitors 42-1 through 42-n increases in proportion to the size and proximity of the object.

According to the present invention, the capacitance at each sensor matrix node is measured simultaneously using charge integrator circuits 44-1 through 44-n. Charge-integrator circuits 44-1 through 44-n serve to inject charge into the capacitances 42-1 through 42-n, respectively, and to develop an output voltage proportional to the capacitance sensed on the corresponding X matrix line. Thus charge-integrator circuits 44-1 through 44-n are shown as bidirectional amplifier symbols. Each charge-integrator circuit 44-1 through 44-n is supplied with an operating bias voltage by bias-voltage generating circuit 46.

As used herein, the phrase "proportional to the capacitance" means that the voltage signal generated is a monotonic function of the sensed capacitance. In the embodiment described herein, the voltage is directly and linearly proportional to the capacitance sensed. Those of ordinary skill in the art will recognize that other monotonic functions, including but not limited to inverse proportionality, and non-linear proportionality such as logarithmic or exponential functions, could be employed in the present invention without departing from the principles disclosed herein. In addition current-sensing as well as voltage-sensing techniques could be employed.

According to a presently preferred drive/sense method used in the present invention, the capacitance measurements are performed simultaneously across all inputs in one dimension to overcome a problem which is inherent in all prior art approaches that scan individual inputs. The problem with the prior-art approach is that it is sensitive to high frequency and large amplitude noise (large dv/dt noise) that is coupled to the circuit via the touching object. Such noise may distort the finger profile because of noise appearing in a later scan cycle but not an earlier one, due to a change in the noise level.

The present invention overcomes this problem by taking a snapshot" of all inputs simultaneously in X and then Y directions (or visa versa). Because the injected noise is proportional to the finger signal strength across all inputs, it is therefore symmetric around the finger centroid. Because it is symmetric around the finger centroid it does not affect the finger position. Additionally, the charge amplifier performs a differential measuring function to further reject common-mode noise.

Because of the nature of the charge integrator circuits 44-1 through 44-n, their outputs will be changing over time and will have the desired voltage output for only a short time. As presently preferred, filter circuits 48-1 through 48-n are implemented as sample and hold switched capacitor filters.

The desired voltage is captured by the filter circuits 48-1 through 48-n. As controlled by control circuitry, 56, the filter circuits 48-1 through 48-n will filter out any high frequency noise from the sensed signal. This is accomplished by choosing the capacitor for the filter to be much larger than the output capacitance of charge integrator circuits 44-1 through 44-n. In addition, those of ordinary skill in the art will recognize that the switched capacitor filter circuits 48-1 through 48-n will capture the desired voltages and store them.

According to the present invention, the capacitance information obtained in voltage form from the capacitance measurements is digitized and processed in digital format. Accordingly, the voltages stored by filter circuits 48-1 through 48-n are stored in sample/hold circuits 50-1 through 50-n so that the remainder of the circuitry processes input data taken at the same time. Sample/hold circuits 50-1 through 50-n may be configured as conventional sample/hold circuits as is well known in the art.

The sampled analog voltages at the outputs of sample/hold circuits 50-1 through 50-n are digitized by analog-to-digital (A/D) converters 52. As presently preferred, A/D converters 52 resolve the input voltage to a 10-bit wide digital signal (a resolution of one part in 1,024), although those of ordinary skill in the art will realize that other resolutions may be employed. A/D converters 52 may be conventional successive approximation type converters as is known in the art.

Given the charge integrator circuitry employed in the present invention, the background level (no object present) of the charge integrator outputs will be about 1 volt. The $\Delta V$ resulting from the presence of a finger or other object will typically be about 0.4 volt. The voltage range of the A/D converters 52 should therefore be in the range of between about 1-2 volts.

An important consideration is the minimum and maximum voltage reference points for the A/D converters ($V_{min}$ and $V_{max}$). It has been found that noise will cause position jitter if these reference voltages are fixed points. A solution to this problem which is employed in the present invention is to dynamically generate the $V_{min}$ and $V_{max}$ reference voltages from reference capacitances 42-Vmin and 42-Vmax, sensed by charge integrator circuits 44-Vmin and 44-Vmax and processed by filter circuits 48-Vmin and 48-Vmax and stored in sample/hold circuits 50-Vmin and 50-Vmax. In this manner, any common mode noise present when the signals are sampled from the sensor array will also be present in the $V_{min}$ and $V_{max}$ reference voltage values and will tend to cancel. Those of ordinary skill in the art will realize that reference capacitances 44-Vmin and 44-Vmax may either be discrete capacitors or extra traces in the sensor array.

According to the present invention, the $V_{min}$ reference voltage is generated from a capacitor having a value equal to the lowest capacitance expected to be encountered in the sensor array with no object present (about 12pF assuming a 2 inch square sensor array). The $V_{max}$ reference voltage is generated from a capacitor having a value equal to the largest capacitance expected to be encountered in the sensor array with an object present (about 16pF assuming a 2 inch square sensor array).

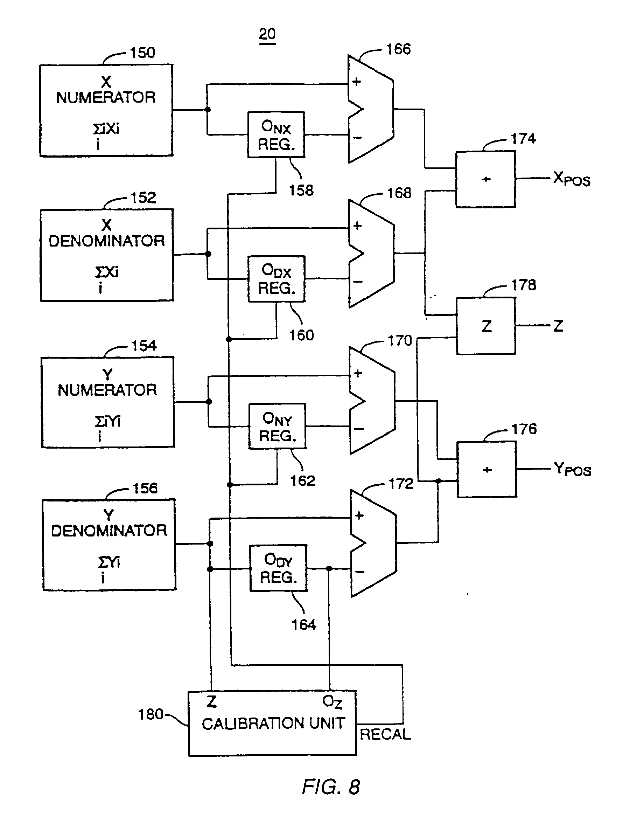

The outputs of A/D converters 52 provide inputs to arithmetic unit 16. As will be more fully disclosed with reference to FIG. 8, the function of arithmetic unit 16 is to compute the weighted average of the signals on the individual sense lines in both the X and Y directions in the touch sensor array 22. Thus, arithmetic unit 16 is shared by the X input processing circuitry 12 and the Y input processing circuitry 14 as shown in FIG.1.

Control circuitry 56 of FIG. 3 orchestrates the operation of the remainder of the circuitry. Because the system is discretely sampled and pipelined in its operation, control circuitry 56 is present to manage the signal flow. The functions performed by control circuitry 56 may be conventionally developed via what is commonly known in the art as a state machine or microcontroller.

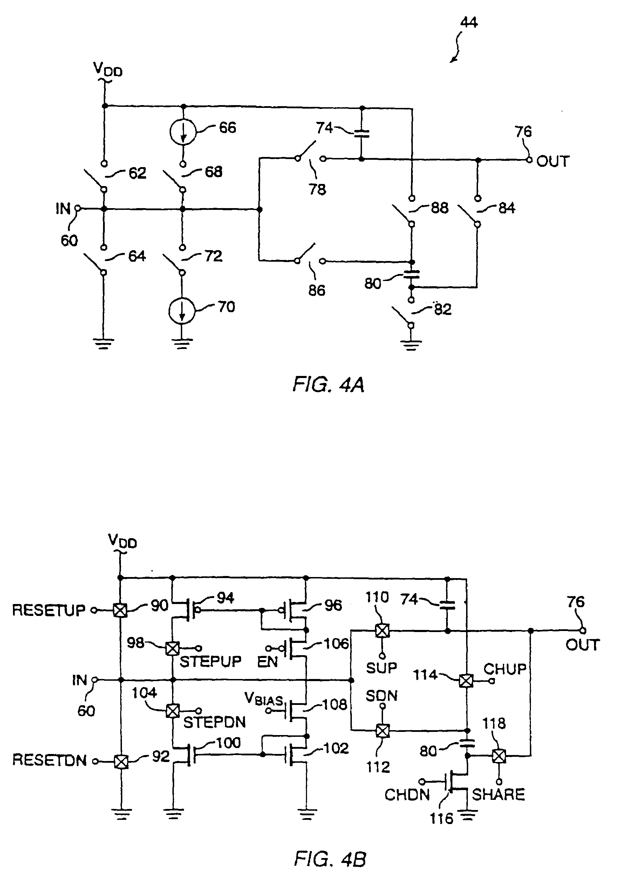

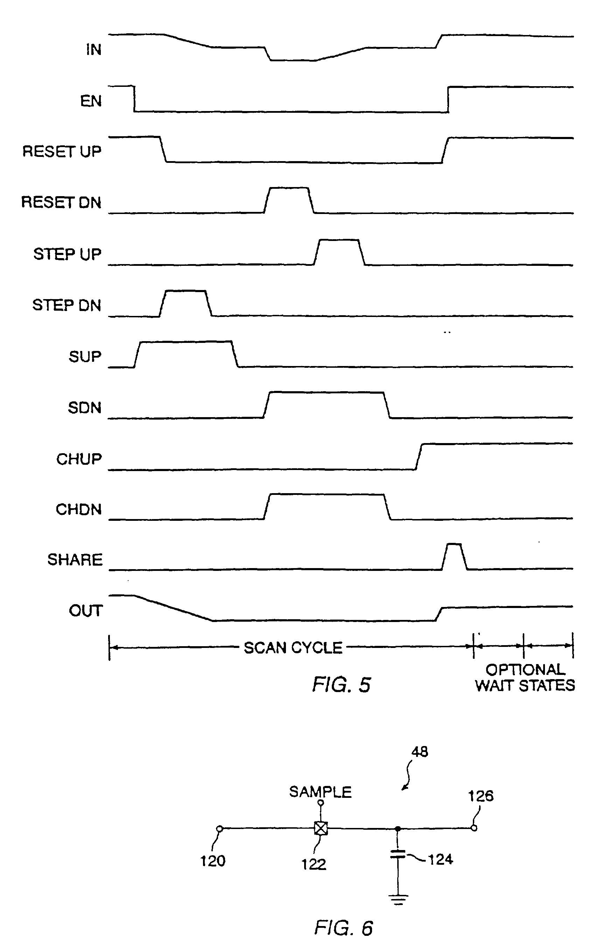

The structure and operation of the individual blocks of FIG. 3 will now be disclosed. Referring now to FIGS. 4a, 4b, and 5, a typical charge integrator circuit will be described. Charge integrator circuit 44 is shown as a simplified schematic diagram in FIG. 4a and as an illustrative schematic diagram in FIG. 4b. The timing of the operation of charge integrator circuit 44 is shown in FIG. 5. These timing signals are provided by the controller block 56.

Charge integrator circuit 44 is based on the fundamental physical phenomena of using a current to charge a capacitor. If the capacitor is charged for a constant time by a constant current, then a voltage will be produced on the capacitor which is inversely proportional to the capacitance. The capacitance to be charged is the sensor matrix line capacitance 42 in parallel with an internal capacitor. This internal capacitor will contain the voltage of interest.

Referring now to FIG. 4a, a simplified schematic diagram of an illustrative charge integrator circuit 44 is shown. A charge integrator circuit input node 60 is connected to one of the X (or Y) lines of the sensor matrix. A first shorting switch 62 is connected between the charge integrator circuit input node 60 and $V_{DD}$, the positive supply rail. A second shorting switch 64 is connected between the charge integrator circuit input node 60 and ground, the negative supply rail. A positive constant current source 66 is connected to $V_{DD}$, the positive supply rail and to the charge integrator circuit input node 60 and through a first current source switch 68. A negative constant current source 70 is connected to ground and to the charge integrator circuit input node 60 and through a second current source switch 72. It is obvious that other high and low voltage rails could be used in place of $V_{DD}$ and ground.

A first internal capacitor 74 is connected between $V_{DD}$ and output node 76 of charge integrator circuit 44. A positive voltage storage switch 78 is connected between output node 76 and input node 60. A second internal capacitor 80 has one of its plates connected to ground through a switch 82 and to output node 76 of charge integrator circuit 44 through a switch 84, and the other one of its plates connected to input node 60 through a negative voltage storage switch 86 and to $V_{DD}$ through a switch 88. The capacitance of first and second internal capacitances 74 and 80 should be a small fraction (i.e., about 10%) of the capacitance of the individual sensor matrix lines. In a typical embodiment, the sensor matrix line capacitance will be about 10pF and the capacitance of capacitors 74 and 80 should be about 1pF.

According to the presently preferred embodiment of the invention, the approach used is a differential measurement for added noise immunity, the benefit of which is that any low frequency common mode noise gets subtracted out. For the following discussion, it is to be assumed that all switches are open unless they are noted as closed. First, the sensor matrix line is momentarily shorted to $V_{DD}$ through switch 62, switch 78 is closed connecting capacitor 74 in parallel with the capacitance of the sensor line. Then the parallel capacitor combination is discharged with a constant current from current source 70 through switch 72 for a fixed time period. At the end of the fixed time period, switch 78 is opened, thus storing the voltage on the sensor matrix line on capacitor 74.

The sensor line is then momentarily shorted to ground through switch 64, and switches 82 and 86 are closed to place capacitor 80 in parallel with the capacitance of the sensor line. Switch 68 is closed and the parallel capacitor combination is charged with a constant current from current source 66 for a fixed time period equal to the fixed time period of the first cycle. At the end of the fixed time period, switch 86 is opened, thus storing the voltage on the sensor matrix line on capacitor 80.

The first and second measured voltages are then averaged. This is accomplished by opening switch 82 and closing switches 88 and 84, which places capacitor 80 in parallel with capacitor 74. Because capacitors 74 and 80 have the same capacitance, the resulting voltage across them is equal to the average of the voltages across each individually. This final result is the value that is then passed on to the appropriate one of filter circuits 48-1 through 48-n.

The low frequency noise, notably 50/60 Hz and their harmonics, behaves as a DC current component that adds in one measurement and subtracts in the other. When the two results are added together that noise component averages to zero. The amount of noise rejection is a function of how quickly in succession the two opposing charge-up and charge-down cycles are performed as will be disclosed herein. One of the reasons for the choice of this charge integrator circuit is that it allows measurements to be taken quickly.

Referring now to FIG. 4b, a more complete schematic diagram of an illustrative embodiment of charge integrator circuit 44 of the simplified diagram of FIG. 4a is shown. Input node 60 is shown connected to $V_{DD}$ and ground through pass gates 90 and 92, which replace switches 62 and 64 of FIG. 4a. Pass gate 90 is controlled by a signal **ResetUp** presented to its control input and pass gate 92 is controlled by a signal **ResetDn** presented to its control input. Those of ordinary skill in the art will recognize that pass gates 90 and 92, as well as all of the other pass gates which are represented by the same symbol in FIG. 4b may be conventional CMOS pass gates as are known in the art. The convention used herein is that the pass gate will be off when its control input is held low and will be on and present a low impedance connection when its control input is held high.

P-Channel MOS transistors 94 and 96 are configured as a current mirror. P-Channel MOS transistor 94 serves as the current source 66 and pass gate 98 serves as switch 68 of FIG. 4a. The control input of pass gate 98 is controlled by a signal **StepUp.**

N-Channel MOS transistors 100 and 102 are also configured as a current mirror. N-Channel MOS transistor 100 serves as the current source 70 and pass gate 104 serves as switch 72 of FIG. 4a. The control input of pass gate 104 is controlled by a signal **StepDn**. P-Channel MOS transistor 106 and N-Channel MOS transistor 108 are placed in series with P-Channel MOS current mirror transistor 96 and N-Channel MOS current mirror transistor 102. The control gate of P-Channel MOS transistor 106 is driven by an enable signal **EN,** which turns on P-Channel MOS transistor 106 to energize the current mirrors. This device is used as a power conservation device so that the charge integrator circuit 44 may be turned off to conserve power when it is not in use.

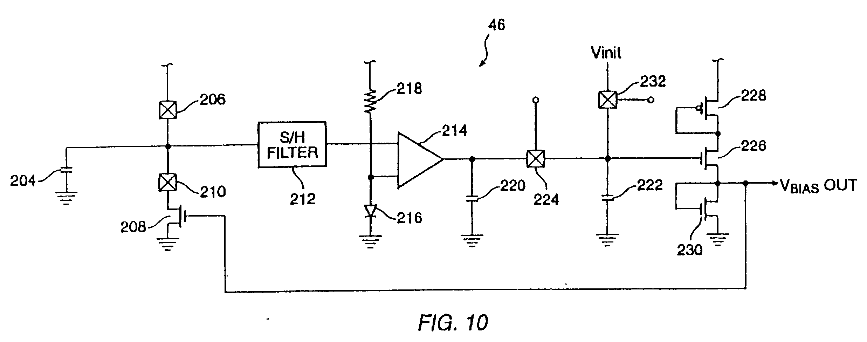

N-Channel MOS transistor 108 has its gate driven by a reference voltage **Vbias**, which sets the current through current mirror transistors 96 and 108. The voltage **Vbias** is set by a servo feedback circuit as will be disclosed in more detail with reference to FIG. 10. Those of ordinary skill in the art will appreciate that this embodiment allows calibration to occur in real time (via long time constant feedback) thereby zeroing out any long term effects due to sensor environmental changes. In a current embodiment of the invention, **Vbias** is common for all charge integrator circuits 44-1 through 44-n and 44-Vmax and 44-Vmin.

Note that proper sizing of MOS transistors 102 and 108 may provide temperature compensation. This is accomplished by taking advantage of the fact that the threshold of N-Channel MOS transistor 108 reduces with temperature while the mobility of both N-Channel MOS transistors 102 and 108 reduce with temperature. The threshold reduction has the effect of increasing the current while the mobility reduction has the effect of decreasing the current. By proper device sizing these effects can cancel each other out over a significant part of the operating range.

Capacitor 74 has one plate connected to $V_{DD}$ and the other plate connected to the output node 76 and to the input node 60 through pass gate 110, shown as switch 78 in FIG. 4a. The control input of pass gate 110 is driven by the control signal **SUp.** One plate of capacitor 80 is connected to input node 60 through pass gate 112 (switch 86 in FIG. 4a) and to VDD through pass gate 114 (switch 82 in FIG. 4a). The control input of pass gate 112 is driven by the control signal **SDn** and the control input of pass gate 114 is driven by the control signal **ChUp**. The other plate of capacitor 80 is connected to ground through N-Channel MOS transistor 116 (switch 82 in FIG. 4a) and to output node 76 through pass gate 118 (switch 84 in FIG. 4a). The control input of pass gate 118 is driven by control signal **Share.**

Referring now to FIGS. 4a, 4b and the timing diagram of FIG. 5, the operation of charge integrator circuit 44 during one scan cycle may be observed. First the **EN** (enable) control signal goes active by going to 0v. This turns on the current mirrors and energizes the charge and discharge current sources, MOS transistors 94 and 100. The **ResetUp** control signal is active high at this time, which shorts the input node 60 (and the sensor line to which it is connected) to $V_{DD}$. The **SUp** control signal is also active high at this time which connects capacitor 74 and the output node 76 to input node 60. This arrangement guarantees that the following discharge portion of the operating cycle always starts from a known equilibrium state.

The discharge process starts after the **ResetUp** control signal goes inactive. The **StepDn** control signal goes active, connecting MOS transistor 100, the discharge current source, to the input node 60 and its associated sensor line. **StepDn** is active for a set amount of time, and the negative constant current source discharges the combined capacitance of the sensor line and capacitor 74 thus lowering its voltage during that time. **StepDn** is then turned off. A short time later the **SUp** control signal goes inactive, storing the measured voltage on capacitor 74. That ends the discharge cycle.

Next, the **ResetDn** control signal becomes active and shorts the sensor line to ground. Simultaneously the **SDn** and **ChDn** control signals become active and connect capacitor 80 between ground and the sensor line. Capacitor 80 is discharged to ground, guaranteeing that the following charge up cycle always starts from a known state.

The charge up cycle starts after **ResetDn** control signal becomes inactive and the **StepUp** control signal becomes active. At this point the current charging source, MOS transistor 94, is connected to the sensor line and supplies a constant current to charge the sensor line by increasing the voltage thereon. The **StepUp** control signal is active for a set amount of time (preferably equal to the time for the previously mentioned cycle) allowing the capacitance to charge, and then it is turned off. The **SDn** control signal then goes inactive, leaving the measured voltage across capacitor 80.

The averaging cycle now starts. First the voltage on capacitor 80 is level shifted. This is done by the **ChDn** control signal going inactive, letting one plate of the capacitor 80 float. Then the **ChUp** control signal goes active, connecting the second plate of the capacitor to $V_{DD}$. Then the **Share** control signal becomes active which connects the first plate of capacitor 80 to output node 76, thus placing capacitors 74 and 80 in parallel. This has the effect of averaging the voltages across the two capacitors, thus subtracting out common-mode noise as previously described. This average voltage is also then available on output node 76.

Those of ordinary skill in the art will recognize that the environmental alternating current and other low frequency noise-canceling feature inherent in the averaging of the voltages obtained in the discharge and charge cycles is most effective when the two cycles are performed very close together in time. According to the present invention, the **ChDn** and **ChUp** signals should be asserted with respect to each other within a time period much less than a quarter of the period of the noise to be canceled in order to take advantage of this feature of the present invention.

According to the present invention, two different drive/sense methods have been disclosed. Those of ordinary skill in the art will readily observe that the charge integrator circuit 44 disclosed with reference to FIGS. 4a, 4b, and 5 is adaptable to operate according to either scanning method disclosed herein.

As is clear from an understanding of the operation of charge integrator circuit 44, its output voltage is only available for a short period of time and is subject to environmental noise. In order to minimize the effects of noise, a switched capacitor filter circuit 48 is used. Referring now to FIG. 6, a schematic diagram of an illustrative switched capacitor filter circuit 48 which may be used in the present invention is shown. Those of ordinary skill in the art will recognize this switched capacitor filter circuit, which comprises an input node 120, a pass gate 122 having a control input driven by a **Sample** control signal, a capacitor 124 connected between the output of the pass gate 126 and a fixed voltage such as ground, and an output node comprising the common connection between the capacitor 124 and the output of the pass gate 126. In a typical embodiment, capacitor 116 will have a capacitance of about 10 pF.

As will be appreciated by persons of ordinary skill in the art, the switched capacitor filter 48 is in part a sample/hold circuit and has a filter time constant which is K times the period of sample, where K is the ratio of capacitor 124 to the sum of capacitors 74 and 80 of the charge integrator circuit 44 of FIGS. 4a and 4b to which it is connected. The switched capacitor filter circuit 48 further reduces noise injection in the system. In the preferred embodiment, K = 10/2 = 5. Those of ordinary skill in the art will recognize that other types of filter circuits, such as RC filters, may be employed in the present invention.

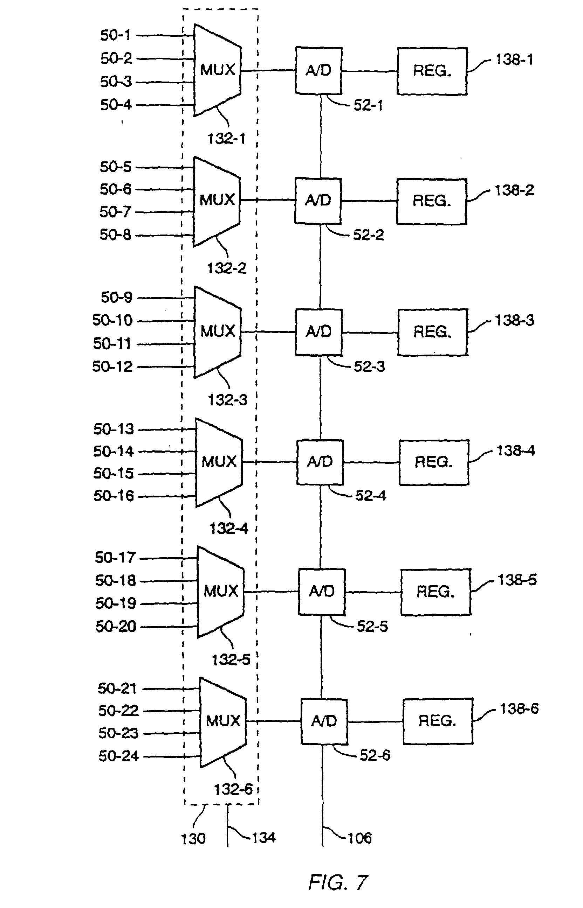

Referring now to FIG. 7, a more detailed block diagram of a presently preferred arrangement of A/D converters 52 of FIG. 3 is presented. There are fewer A/D converters than there are lines in the touch sensor array, and the inputs to the A/D converters are multiplexed to share each of the individual A/D converters among several lines in the touch sensor array. The arrangement in FIG. 7 is more efficient in the use of integrated circuit layout area than providing individual A/D converters for each input line.

In the embodiment illustrated in FIG. 7, twenty-four conductive line traces are assumed for the sensor array 10 of FIGS. 2a-2d. As shown in FIG. 7, the outputs of sample/hold circuits 50-1 through 50-24 are fed to the analog data inputs of analog multiplexer 130. Analog multiplexer 130 has six outputs, each of which drives the input of an individual A/D converter 52-1 through 52-6. The internal arrangement of analog multiplexer 130 is such that four different ones. of the inputs are multiplexed to each of the outputs. Analog multiplexer 130 has been conceptually drawn as six internal multiplexer blocks 132-1 through 132-6.

In the example shown in FIG. 7, inputs taken from sample/hold circuits 50-1 through 50-4 are multiplexed to the output of internal multiplexer block 132-1 which drives A/D converter 52-1. Similarly, inputs taken from sample/hold circuits 50-5 through 50-8 are multiplexed to the output of internal multiplexer block 132-2 which drives A/D converter 52-2; inputs taken from sample/hold circuits 50-9 through 50-12 are multiplexed to the output of internal multiplexer block 132-3 which drives A/D converter 52-3; inputs taken from sample/hold circuits 50-13 through 50-16 are multiplexed to the output of internal multiplexer block 132-4 which drives A/D converter 52-4; inputs taken from sample/hold circuits 50-17 through 50-20 are multiplexed to the output of internal multiplexer block 132-5 which drives A/D converter 52-5; and inputs taken from sample/hold circuits 50-21 through 50-24 are multiplexed to the output of internal multiplexer block 132-6 which drives A/D converter 52-6.

Analog multiplexer 130 has a set of control inputs schematically represented by bus 134. In the illustrative embodiment shown in FIG. 7, each of internal multiplexers 132-1 through 132-6 are four-input multiplexers and thus control bus 134 may comprise a two-bit bus for a one-of-four selection. Those of ordinary skill in the art will recognize that the arrangement of FIG. 7 is merely one of a number of specific solutions to the task of A/D conversion from twenty-four channels, and that other satisfactory equivalent arrangements are possible.

In a straightforward decoding scheme, multiplexers 132-1 through 132-6 will pass, in sequence, the analog voltages present on their first through fourth inputs on to the inputs of A/D converters 52-1 through 52-6 respectively. After the analog values have settled in the inputs of A/D converters 52-1 through 52-6, a **CONVERT** command is asserted on common A/D control line 136 to begin the A/D conversion process.

When the A/D conversion process is complete, the digital value representing the input voltage is stored in registers 138-1 through 138-6. As presently preferred, registers 138-1 through 138-6 may each comprise a two-word register, so that one word may be read out of the registers to arithmetic unit 54 while a second word is being written into the registers in order to maximize the speed of the system. The design of such registers is conventional in the art.

Referring now to FIG. 8, a more detailed block diagram of the arithmetic unit 16 is presented. Those of ordinary skill in the art will appreciate that arithmetic unit 16 processes information from both the X and Y dimensions, i.e., from X input processing circuit 12 and Y input processing circuit 14 of FIG.1.

Before disclosing the structural configuration of arithmetic unit 16, it is helpful to understand the preferred method by which the centroid position of an object proximate to the sensor array 22 is determined according to the present invention.

According to a presently preferred embodiment of the invention, the object position in either direction may be determined by evaluating the weighted average of the capacitances measured on the individual sense line of the sensor array 10. In the following discussion, the X direction is used, but those of ordinary skill in the art will recognize that the discussion applies to the determination of the weighted average in the Y direction as well. As is well known, the weighted average may be determined as follows:

$$X \text{ position } = \frac{\sum_{i=0}^{n} i \times \Delta C_i}{\sum_{i=0}^{n} \Delta C_i} \qquad \text{[Eq. 1]}$$

where $\Delta C_i = C_i . C0_i$, $C_i$ is the capacitance presently being measured on the $i$th trace and $C0_i$ is the value measured on that same trace at some past time when no object was present. In terms of these past and present capacitance measurements, the position can be expressed as:

$$X \text{position} = \frac{\sum_{i=0}^{n} i \times (C_i - C0_i)}{\sum_{i=0}^{n} (C_i - C0_i)} \qquad \text{[Eq. 2]}$$

Using the distributive property of multiplication over addition, this expression is seen to be equivalent to:

$$X \text{position} = \frac{-\sum_{i=0}^{n} (i \times C0_i) + \sum_{i=0}^{n} (i \times C_i)}{-\sum_{i=0}^{n} (C0_i) + \sum_{i=0}^{n} (C_i)} \qquad \text{[Eq. 3]}$$

where the negative terms in both the numerator and denominator are offsets and represent the background value of the capacitances with no object present. If the term $O_N$ is used to represent the numerator offset and the term $O_D$ is used to represent the denominator offset, Eq. 3 may be re-written as:

$$X \text{position} = \frac{-O_N + \sum_{i=0}^{n} (i \times C_i)}{-O_D + \sum_{i=0}^{n} (C_i)} \qquad \text{[Eq. 4]}$$

Referring now to FIG. 8, it may be seen that arithmetic unit 16 includes X numerator and denominator accumulators 150 and 152 and Y numerator and denominator accumulators 154 and 156. The source of operand data for X numerator and denominator accumulators 150 and 152 and Y numerator and denominator accumulators 154 and 156 are the registers 138-1 through 138-6 in each (X and Y) direction of the sensor array 22 of FIG. 1. The X and Y denominator accumulators 152 and 156 sum up the digital results from the A/D conversions. The X and Y numerator accumulators 150 and 154 compute the weighted sum of the input data rather than the straight sum. Accumulators 150, 152, 154, and 156 may be configured as hardware elements or as software running on a microprocessor as will be readily understood by those of ordinary skill in the art.

As may be seen from an examination of FIG. 8, numerator accumulators 150 and 154 compute the expression of Eq. 4:

$$\sum_{i=0}^{n} i \times C_i \qquad \text{[Eq. 5]}$$

and denominator accumulators 152 and 156 compute the expression of Eq. 4:

$$\sum_{i=0}^{n} C_i \qquad \text{[Eq. 6]}$$

The contents of X and Y numerator and denominator offset registers 158, 160, 162, and 164 are subtracted from the results stored in the accumulators 150, 152, 154, and 156 in adders 166, 168, 170, and 172. Adder 166 subtracts the offset $O_{NX}$ stored in X numerator offset register 158. Adder 168 subtracts the offset $O_{DX}$ stored in X denominator offset register 160. Adder 170 subtracts the offset $O_{NY}$ stored in Y numerator offset register 162. Adder 172 subtracts the offset $O_{DY}$ stored in Y denominator offset register 164. The numerator denominator pairs are divided by division blocks 174 and 176 to produce the X and Y position data, and the X and Y denominator pair is used by block 178 to produce Z axis (pressure) data. The function performed by block 178 will be disclosed later herein. The offsets $O_{DX}$, $O_{NX}$, $O_{DY}$, and $O_{NY}$ are sampled from the accumulator contents when directed by calibration unit 180.

Persons of ordinary skill in the art will readily appreciate that the architecture of the system of the present invention may be distributed in a number of ways, several of which involve the availability of a microprocessor, whether it be in a host computer to which the system of the present invention is connected or somewhere between the integrated circuit described herein and a host computer. Embodiments of the present invention are contemplated wherein the accumulated numerator and denominator values representing the summation terms are delivered to such a microprocessor along with the $O_N$ and $O_D$ offset values for processing, or where all processing is accomplished by a programmed microprocessor as is known in the art.

Initially, the numerator and denominator accumulators 150, 152, 154, and 156 are set to zero during system startup. If the multiplexed A/D converters as shown in FIG. 7 are employed, the digitized voltage data in the first word of register 138-1 (representing the voltage at the output of sample/hold circuit 50-1) is added to the sum in the accumulator and the result stored in the accumulator. In succession, the digitized voltage values stored in the first word of registers 138-2 through 138-6 (representing the voltage at the outputs of sample/hold circuits 50-5, 50-9, 50-13, 50-17, and 50-21, respectively) are added to the sums in the accumulators and the results stored in the accumulators. As previously mentioned, A/D converters 52-1 through 52-6 may at this time be converting the voltages present at the outputs of sample/hold circuits 50-2, 50-6, 50-10, 50-14, 50-18, and 50-22 and storing the digitized values in the second words of registers 138-1 through 138-6 respectively.

Next, in succession, the digitized voltage values stored in the second words of registers 138-1 through 138-6 (representing the voltage at the outputs of sample/hold circuits 50-2, 50-6, 50-10, 50-14, 50-18, and 50-22, respectively) are added to the sum in the accumulator and the result stored in the accumulator.

Next, in succession, the digitized voltage values stored in the first words of registers 138-1 through 138-6 (representing the voltage at the outputs of sample/hold circuits 50-3, 50-7, 50-11, 50-15, 50-19, and 50-23, respectively) are added to the sum in the accumulator and the result stored in the accumulator, followed by digitized voltage values stored in the second words of registers 138-1 through 138-6 (representing the voltage at the outputs of sample/hold circuits 50-4, 50-8, 50-12, 50-16, 50-20, and 50-24, respectively).

At this point in time, the accumulators hold the sums of all of the individual digitized voltage values. The digital values stored in the $O_N$ and $O_D$ offset registers 158, 160, 162, and 164 are now respectively subtracted from the values stored in the numerator and denominator accumulators. The division operation in dividers 174 and 176 then completes the weighted average computation.

The division operation may also be performed by an external microprocessor which can fetch the values stored in the accumulators or perform the accumulations itself. As the $O_N$ and $O_D$ offset values are presently derived by an external microprocessor, the additional processing overhead presented to such external microprocessor by this division operation is minimal. Alternately, a dedicated microprocessor may be included on chip to handle these processing tasks without departing from the invention disclosed herein.

The above disclosed processing takes place within about 1 millisecond and may be repeatedly performed. Current mouse standards update position information 40 times per second, and thus the apparatus of the present invention may easily be operated at this repetition rate.

Because of the nature of the method employed in the present invention, an opportunity exists to provide additional noise immunity without requiring additional hardware in the system of the present invention. While it is apparent that after the above-disclosed sequence has been performed, the accumulators may be cleared and the process repeated, the values may also be allowed to remain in the accumulators. If this is done, an averaging function may be implemented to further filter out noise. According to this aspect of the invention, a number of samples are taken and run through the accumulators without clearing them at the end of the processing sequence. As presently preferred, twenty-five samples are processed before a single division result is taken for use by the system, thus greatly reducing the effects of transient system noise spikes. Those of ordinary skill in the art will recognize that the number of samples taken prior to clearing the accumulators is a matter of design choice dictated by factors such as data acquisition rates, data processing rates etc.

It is preferable to provide additional filtering of the X and Y position data produced by division blocks 174 and 176 of the arithmetic unit 16 of FIG. 8. The filtering preferably occurs in between arithmetic unit 16 and motion and gesture units 18 and 20 of FIG. 1. The X and Y coordinates are separately filtered as independent numbers. Each filter is an averaging register computing a "running average" as is well-known in the art. When the finger's presence is first detected, the filter register is initialized with the current quotient. In subsequent samples, the new quotient is averaged with the filter register value to produce a new filter register value. In the presently preferred embodiment, the values are equally weighted in the average, though different weightings can be used to provide stronger or weaker filtering. The sequence of values in the filter register serve as the X and Y coordinates used by the motion and gesture units 18 and 20 of FIG.1.

The system of the present invention is adaptable to changing conditions, such as component aging, changing capacitance due to humidity, and contamination of the touch surface, etc. In addition, the present invention effectively minimizes ambient noise. According to the present invention, these effects are taken into consideration in three ways. First, the offset values $O_N$ and $O_D$ are dynamically updated to accommodate changing conditions. Second, a servo-feedback circuit is provided to determine the bias voltage used to set the bias of the charge-integrator circuits 44-1 through 44-n. Third, as previously disclosed herein, the reference voltage points for $V_{max}$ and $V_{min}$ of the A/D converters are also dynamically altered to increase the signal to noise margin.

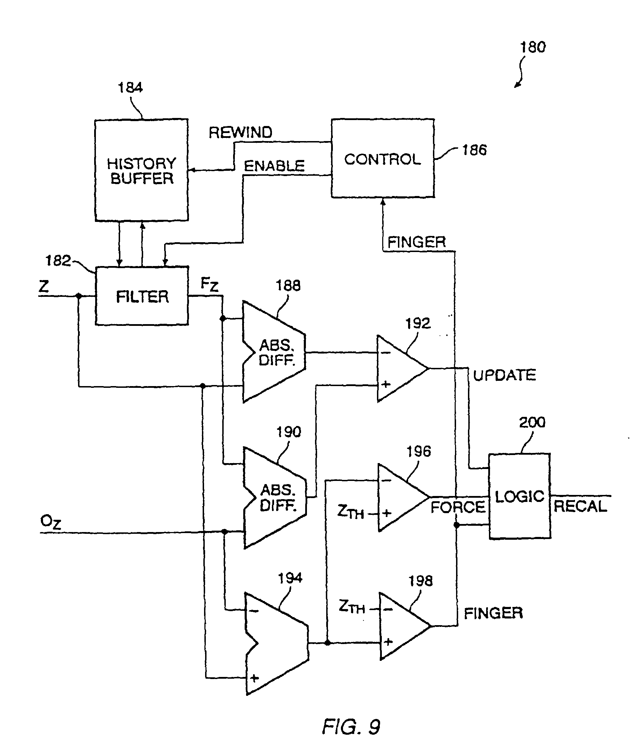

Referring now to FIG. 9, a block diagram of a calibration unit 150 which may be used with the arithmetic unit of FIG. 8 is presented. The calibration unit 150 executes an algorithm to establish the numerator and denominator offset values by attempting to determine when no finger or other conductive object is proximate to the touch sensor array 22.

As previously disclosed, the $O_N$ and $O_D$ offset values represent the baseline values of the array capacitances with no object present. These values are also updated according to the present invention since baseline levels which are too low or too high have the effect of shifting the apparent position of the object depending on the sign of the error. These values are established by selection of the values read when no object is present at the sensor array 22. Since there is no external way to "know" when no object is present at sensor array 22, an algorithm according to another aspect of the present invention is used to establish and dynamically update these offset values. When the calibration unit sees a Z value which appears typical of the Z values when no finger is present, it instructs the offset registers (158, 160, 162, and 164 of FIG. 8) to reload from the current values of the accumulators. According to a presently preferred embodiment of the invention, the decision to update the offset values is based on the behavior of the sensor array 22 in only one of the X or Y directions, but when the decision is made all four offsets ($O_{NX}$, $O_{DX}$, $Q_{NY}$, and $O_{DY}$) are updated. In other embodiments of the invention, the decision to update may be individually made for each direction according to the criteria set forth herein.

The calibration algorithm works by monitoring changes in a selected one of the denominator accumulator values. According to the present invention, it has been observed that the sensitivity to changes in capacitance of one of the sets of conductive lines in the touch sensor array 22 is greater than the sensitivity to changes in capacitance of the other one of the sets of conductive lines in the touch sensor array 22. Experience suggests that the set of conductive lines having the greater sensitivity to capacitance changes is the one which is physically located above the conductive lines in the other direction and therefore closest to the touch surface of the sensor array 22. The upper set of conductive lines tends to partially shield the lower set of conductive lines from capacitive changes occurring above the surface of the sensor array 22.

The finger pressure is obtained by summing the capacitances measured on the sense lines. This value is already present in the denominator accumulator after subtracting the offset $O_D$. A finger is present if the pressure exceeds a suitable threshold value. This threshold may be chosen experimentally and is a function of surface material and circuit timing. The threshold may be adjusted to suit the tastes of the individual user.

The pressure reported by the device is a simple function $f(X_D, Y_D)$ of the denominators for the X and Y directions as implemented in block 178 of FIG. 8. Possible functions include choosing one preferred denominator value, or summing the denominators. In a presently preferred embodiment, the smaller of the two denominators is chosen. This choice has the desirable effect of causing the pressure to go below the threshold if the finger moves slightly off the edge of the pad, where the X sensors are producing valid data, but the Y sensors are not, or vise versa. This acts as an electronic bezel which can take the place of a mechanical bezel at the periphery of the sensor area.

In the example of FIG. 8, the Y denominator is chosen for monitoring because it is the most sensitive. The chosen denominator is referred to as Z for the purposes of the calibration algorithm. The current saved offset value for this denominator is referred to as $O_Z$.

The goal of the calibration algorithm is to track gradual variations in the resting Z level while making sure not to calibrate to the finger, nor to calibrate to instantaneous spikes arising from noise. As will be apparent to those of ordinary skill in the art from the following disclosure, the calibration algorithm could be implemented in digital or analog hardware, or in software. In a current embodiment actually tested by the inventors, it is implemented in software.

As Z values arrive in the calibration unit, they are passed through filter 182. History buffer 184, which operates in conjunction with filter 182, keeps a "running average" of recent Z values. When a new Z value arrives, the current running average $F_Z$ is updated according to the formula:

$$\text{new } F_Z = \alpha(\text{old } F_Z) + (1 - \alpha)Z \qquad\qquad \text{[Eq. 7]}$$

where $\alpha$ is a constant factor between 0 and 1 and typically close to 1 and Z is the current Z value. In the preferred embodiment, alpha is approximately 0.95. The intention is for $F_Z$ to change slowly enough to follow gradual variations, without being greatly affected by short perturbations in Z.

The filter 182 receives a signal **ENABLE** from control unit 186. The running average $F_Z$ is updated based on new Z values only when **ENABLE** is asserted. If **ENABLE** is deasserted, $F_Z$ remains constant and is unaffected by current Z.

The history buffer 184 records the several most recent values of $F_Z$. In the present embodiment, the history buffer records the two previous $F_Z$ values. The history buffer might be implemented as a shift register, circular queue, or analog delay line. When the history buffer receives a **REWIND** signal from control unit 186, it restores the current running average $F_Z$ to the oldest saved value. It is as if the filter 182 were "retroactively" disabled for an amount of time corresponding to the depth of the history buffer. The purpose of the history buffer is to permit such retroactive disabling.

The current running average $F_Z$ is compared against the current Z value and the current offset $O_Z$ by absolute difference units 188 and 190, and comparator 192. Absolute difference unit 188 subtracts the values Z and $F_Z$ and outputs the absolute value of their difference. Absolute difference unit 190 subtracts the values $O_Z$ and $F_Z$ and outputs the absolute value of their difference. Comparator 192 asserts the UPDATE signal if the output of absolute difference unit 188 is less than the output of absolute difference unit 190, i.e., if $F_Z$ is closer to Z than it is to $O_Z$. The UPDATE signal will tend to be asserted when the mean value of Z shifts to a new resting level. It will tend not to be asserted when Z makes a brief excursion away from its normal resting level. The filter constant a determines the length of an excursion which will be considered "brief" for this purpose.

Subtractor unit 194 is a simple subtractor that computes the signed difference between Z and $O_Z$. This subtractor is actually redundant with subtractor 172 in figure 8, and so may be merged with it in the actual implementation. The output $C_Z$ of this subtractor is the calibrated Z value, an estimate of the finger pressure. This pressure value is compared against a positive and negative Z threshold by comparators 196 and 198. These thresholds are shown as $Z_{TH}$ and $-Z_{TH}$, although they are not actually required to be equal in magnitude.

If pressure signal $C_Z$ is greater than $Z_{TH}$, the signal **FINGER** is asserted indicating the possible presence of a finger. The $Z_{TH}$ threshold used by the calibration unit is similar to that used by the rest of the system to detect the presence of the finger, or it may have a different value. In the present embodiment, the calibration $Z_{TH}$ is set somewhat lower than the main $Z_{TH}$ to ensure that the calibration unit makes a conservative choice about the presence of a finger.

If pressure signal $C_Z$ is less than . $Z_{TH}$, the signal **FORCE** is asserted. Since $O_Z$ is meant to be equal to the resting value of Z with no finger present, and a finger can only increase the sensor capacitance and thus the value of Z, a largely negative $C_Z$ implies that the device must have incorrectly calibrated itself to a finger, which has just been removed. Calibration logic 200 uses this fact to force a recalibration now that the finger is no longer present.

Control logic 186 is responsible for preventing running average $F_Z$ from being influenced by Z values that occur when a finger is present. Output **ENABLE** is generally off when the **FINGER** signal is true, and on when the **FINGER** signal is false. However, when **FINGER** transitions from false to true, the control logic also pulses the **REWIND** signal. When **FINGER** transitions from true to false, the control logic waits a short amount of time (comparable to the depth of the history buffer) before asserting **ENABLE.** Thus, the running average is prevented from following Z whenever a finger is present, as well as for a short time before and after the finger is present.

Calibration logic 200 produces signal **RECAL** from the outputs of the three comparators 192, 196, and 198. When **RECAL** is asserted, the offset registers $O_N$ and $O_D$ will be reloaded from the current accumulator values. **RECAL** is produced from the following logic equation:

RECAL = FORCE or (UPDATE and not FINGER). [Eq. 8]

In addition, calibration logic 200 arranges to assert **RECAL** once when the system is first initialized, possibly after a brief period to wait for the charge integrators and other circuits to stabilize.

From the descriptions of control logic 186 and calibration logic 200, it will be apparent to those of ordinary skill in the art that these blocks can be readily configured using conventional logic as a matter of simple and routine logic design.

It should be obvious to any person of ordinary skill in the art that the calibration algorithm described is not specific to the particular system of charge integrators and accumulators of the current invention. Rather, it could be employed in any touch sensor which produces proximity or pressure data in which it is desired to maintain a calibration point reflecting the state of the sensor when no finger or spurious noise is present.

Referring now to FIG. 10, a bias voltage generating circuit 46 useful in the present invention is shown in schematic diagram form. According to a presently preferred embodiment of the invention, all of the bias transistors 108 (FIG. 4b) of charge integrator circuits 44-1 through 44-n have their gates connected to a single source of bias voltage, although persons of ordinary skill in the art recognize that other arrangements are possible. There are a number of ways in which to generate the bias voltage required by charge integrator circuits 44-1 through 4-n.

As may be seen from an examination of FIG. 10, the bias voltage generating circuit 46 is an overdamped servo system. A reference source which approximates the current source function of a typical one of the charge integrator circuits 44-1 through 44-n includes a capacitor 202 having one of its plates grounded. The other one of its plates is connected to the $V_{DD}$ power supply through a first pass gate 204 and to a current source transistor 206 through a second passgate 208. A filter circuit 210, identical to the filter circuits 48-1 through 48-n and controlled by the same signal as filter circuits 48-1 through 48-n is connected to sample the voltage on capacitor 202 in the same manner that the filter-and-sample/hold circuits 48-1 through 48-n sample the voltages on the sensor conductor capacitances in the sensor array 22.

The output of filter circuit 210 is fed to the non-inverting input of a weak transconductance amplifier 212, having a bias current in the range of from about 0.1-0.2μA. The inverting input of the transconductance amplifier 212 is connected to a fixed voltage of about 1 volt generated, for example, by diode 214 and resistor 216. The output of transconductance amplifier 212 is shunted by capacitor 218 and also by capacitor 220 through passgate 222. Capacitor 220 is chosen to be much larger than capacitor 218. In a typical embodiment of the present invention, capacitor 218 may be about 0.2pF and capacitor 220 may be about 10pF.

Capacitor 220 is connected to the gate of N-Channel MOS transistor 224, which has its drain connected to the drain and gate of P-Channel MOS transistor 226 and its source connected to the drain and gate of N-Channel MOS transistor 228. The source of P-Channel MOS transistor 226 is connected to $V_{DD}$ and the source of N-Channel MOS transistor 228 is connected to ground. The common drain connection of transistors 224 and 228 is the bias voltage output node.

An optional passgate 230 may be connected between a fixed voltage source (e.g., about 2 volts) and capacitor 220. Passgate 230 may be used to initialize the bias generating circuit 46 on startup by charging capacitor 220 to the fixed voltage.

During each sample period, the filter circuit 210 takes a new sample. If the new sample differs from the previous sample, the output voltage of transconductance amplifier 212 will change and start to charge or discharge capacitor 218 to a new voltage. Passgate 222 is switched on for a short time (i.e., about 1 μsec) and the voltages on capacitors 218 and 220 try to average themselves. Due to the large size difference between capacitors 218 and 220, capacitor 218 cannot supply enough charge to equalize the voltage during the period when passgate 222 is open. This arrangement prevents large changes in bias voltage from cycle to cycle.

Capacitor 202 should look as much as possible like one of the sensor array channels and has a value equal to the background capacitance of a typical sensor line, (i.e., with no object proximate or present capacitance component). Capacitor 202 may be formed in several ways. Capacitor 202 may comprise an extra sensor line in a part of the sensor array, configured to approximate one of the active sensor lines but shielded from finger capacitance by a ground plane, etc. Alternately, capacitor 202 may be a capacitor formed in the integrated circuit or connected thereto and having a value selected to match that of a typical sensor line. In this respect, the signal source comprising capacitor 202 and filter circuit 210 is somewhat like the circuitry for generating the $V_{max}$ and $V_{min}$ reference voltages, in that it mimics a typical sensor line.

As another alternative, one of the actual sensor lines may be employed to set the bias voltage. The measured voltage on the two end-point sensor lines may be compared and the one having the lowest value may be selected on the theory that, if a finger or other object is proximate to the sensor array, it will not be present at sensor lines located at the opposite edges of the array.

The capacitive sensor on currently-available capacitive touchpads, such as the one disclosed herein operates by forcing a current through or voltage on to a capacitive sensor, and measuring the resulting voltage. A finger or other object placed on or near the capacitive touchpad sensor adds capacitance and changes the measured voltage. Since the finger or other object is in no other way electrically connected to the touchpad, the finger and the touchpad share no common voltage reference and the voltage of the finger relative to the touchpad is free to vary. This distorts the measured voltage.

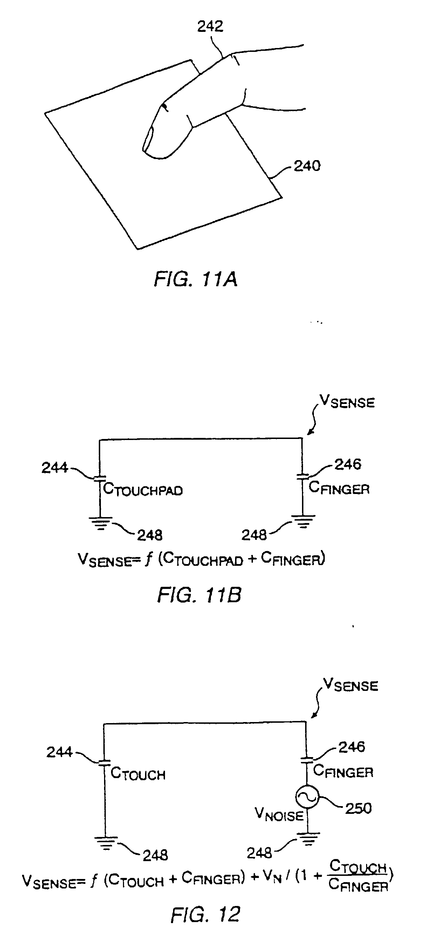

Referring now to FIGS. 11 and 12, the problem solved by the present invention is illustrated. FIG. 11a shows a touchpad 240 with a proximately-located finger 242, and FIG. 11b is a diagram of the electrical equivalent circuit of the arrangement of FIG. 11a, assuming a finger near the touchpad with the finger and the touchpad sharing a common ground. Capacitor 244 represents the capacitance of the touchpad 240 and capacitor 246 represents the capacitance of the finger 242. Capacitor 244 and 246 are in parallel and share a common ground connection shown schematically by the ground symbols at reference numeral 248. This is not the usual situation, since it is unusual and inconvenient for a user to place himself or herself at system ground by using a wrist strap or other device.

FIG. 12 is a diagram showing the electrical equivalent circuit of the arrangement of FIG. 11a when the finger is floating with respect to touchpad ground and where thus the finger voltage varies relative to touchpad ground. Again capacitor 244 represents the capacitance of the touchpad and capacitor 246 represents the capacitance of the finger. However, as may be seen from FIG. 12, no common ground exists between capacitor 244 and capacitor 246. This situation is represented by noise source 250 interposed between the lower plate of capacitor 246 and ground at reference numeral 248. From the disclosure herein, those of ordinary skill in the art will appreciate that FIG. 12 represents the most usual case in a real capacitive touchpad operating environment, and illustrates the problem solved by the present invention.

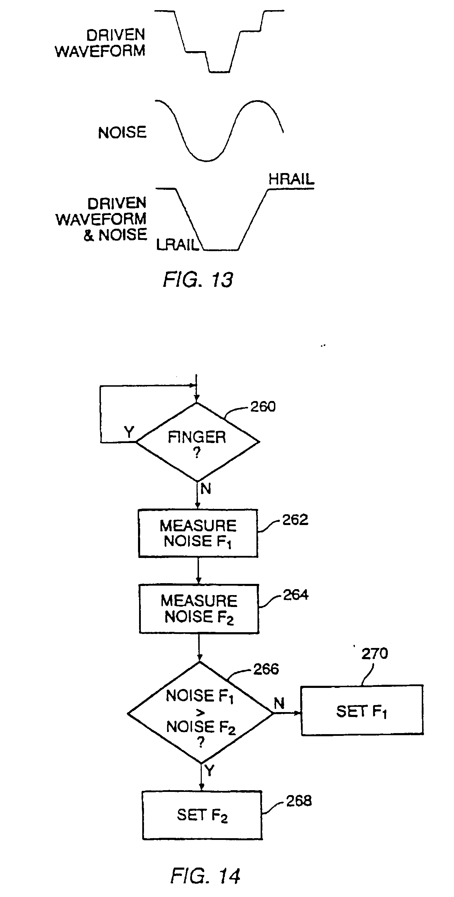

FIG. 13 is a set of waveforms which show another aspect of the susceptibility of capacitor touchpad systems to finger noise. The first waveform is the actual signal to be sampled, the second waveform is the noise component, and the third waveform is the resultant sampled signal plus noise. In FIG. 13, it is assumed that the initial sample period gets driven low by the noise and that the second sample period gets driven high by the noise. The combination of the two results adds the two noise components instead of canceling them out. If the noise is periodic and very close to the sampling frequency, a low-frequency aliasing or beat pattern will arise in the measured data which can masquerade as finger motion.

According to the present invention, a solution to the problems illustrated in FIGS. 11, 12, and 13 is presented as apparatus and a method for minimizing noise effects in capacitive touchpad systems. The solution of the present invention involves two concepts. First, a determination is made whether an aliasing noise situation exists. If such a hazardous noise situation exists, the sampling frequency of the touchpad sensor system is changed to a frequency which is not affected by present noise conditions.

According to a presently preferred embodiment of the invention, the amount of noise present at two or more possible operating frequencies is monitored. As presently preferred, the system does this by switching operation from one frequency to the other and estimating how much noise is present at each frequency. When a finger touches down on the touchpad, the system uses the frequency with the least noise present and keeps operation at that frequency until the finger is lifted.

This aspect of the invention is illustrated in the flow diagram of FIG. 14. First at step 260 it is determined if a finger is down. If the finger is down the process cycles back to step 260 until it is determined that no finger (or other object) is present on the touchpad. At steps 262 and 264, the amount of noise at the first and second frequencies is measured. At step 266, it is determined if the noise is greater at the first frequency or at the second frequency. If the noise is greater at the first frequency, the system is set to operate at the second frequency at step 268 and if the noise is greater at the second frequency, the system is set to operate at the first frequency at step 270.

Generally, according to a preferred embodiment of the present invention, an estimate of the amount of ambient noise may be made by examining the sequence of measured capacitances when no finger or other object is present. If the measured capacitances appear to oscillate rather than holding at a steady quiescent value, noise is present on the current sampling frequency. The system examines the amount of oscillation on each of two or more sampling frequencies, and chooses the sampling frequency which produces the least oscillatory noise. In the preferred embodiment, exactly two sampling frequencies are employed in the interest of simplicity.

According to a presently preferred embodiment of the invention, an estimate of the noise level at a given operating frequency may be made using the touch sensor system disclosed herein based on the amount of variation in one of the denominator accumulators X denominator accumulator 152 and Y denominator accumulator 156 of FIG. 8. The values in these accumulators are quite stable under normal conditions, when no finger is present on the touchpad. In the presence of electrical noise these values will oscillate significantly.

These oscillations are in many ways similar to effects the user can produce, somewhat complicating the noise detection issue. The noise characteristics of the environment of the touchpads are constantly changing. This means that a single, static choice of operating frequency is not acceptable. Active detection of a finger and noise monitoring must therefore coexist, making it necessary to distinguish between noise and valid data.

According to the present invention, the average value of the relevant denominator accumulator is tracked while no finger is present. While a finger can cause a noiselike disturbance, it can only cause an increase above the average value, not a decrease. True oscillatory noise can be distinguished by the fact that the accumulator will vary both above and below its resting value. Therefore, the present invention intentionally ignores half of the noise events. (those which are above the average), because this half is too difficult to distinguish from valid finger data.

A running average of the severity of these noise events over time provides an estimate of the amount of noise present at a given operating frequency. The filter constant, which determines the weight of new data relative to the existing average, must be selected to allow the average to respond quickly enough to changing conditions without falling subject to the short-term randomness present in any noise sample.

If the noise averages for both operating frequencies are comparable, both are considered valid sources of tactile data. If one is worse than the other, no tactile data is derived from the noisier frequency. If both sampling rates are unsatisfactory, a more drastic change to the touchpad sampling rate or data filtering algorithms can be made.

It is important that an accurate measure of the current amount of noise at both operating frequencies be maintained, without degrading performance of the touchpad. Of concern here is that any information gathered from a noisy operating frequency must be considered unusable for the purposes of detecting the presence of a finger, and that a loss of more than one sample period due to this uncertainty causes a perceptible decrease in performance.

Switching frequencies in any predictable fashion leads to the danger of further aliasing at the switching rate. Suppose the noise measurement algorithm of FIG. 14 operates 40 times per second. Also suppose that there is a nearly-tuned noise source that causes a beat frequency of about 40 Hz. Then the 25 KHz noise on the input has turned into 40 Hz oscillatory noise in the measured capacitance data. Now, this 40 Hz noise can, in turn, beat with the 40 Hz decision-making rhythm of the noise detector, confusing the noise detector in a roughly analogous way. We appear to have traded an aliasing problem at one frequency for an aliasing problem at another frequency.

Fortunately, small inaccuracies in the decisions made by the noise detector are not noticeable by the user, so it suffices to randomize the timing of the noise detector to disrupt the secondary beating effect. Mathematically, randomizing the timing attenuates but does not eliminate the aliasing effect. In the actual capacitance data, it is important to eliminate the noise as much as possible. In the noise detection algorithm, merely attenuating the disruption due to aliasing is enough to let the algorithm operate reasonably well.

As a result of these concerns, the switching algorithm uses a random input (one of the least significant bits of incoming accumulator data is a handy random input) to decide whether to shift operating frequencies. If the noise levels for the two frequencies are comparable, there is a 50% chance that operation will shift to the other frequency after every sampling period. If one operating frequency is noisier than the other, this switching system is only used for the less noisy frequency. Operation on the noisier frequency is guaranteed to shift after only one sampling period. This permits noise sampling at that frequency, without losing more than one sampling period worth of tactile data.

There are additional circumstances under which it is not desirable to freely switch between operating frequencies. While a finger is known to be present on the pad (which will be detected after a single sampling period of operation on the less noisy frequency, and hence after at most two sampling periods) it is important to constantly monitor it. During any timing-critical gesture which permits the finger to be lifted from the pad it is also important not to miss a sampling period. Frequency shifting is therefore preferably inhibited during these situations.

As discussed below, control of which frequency the system operates at is based on the output from a data line which has other functions. It is not necessary for the entire sampling interval to be at a single frequency. It is sufficient for the purposes of the algorithm that a statistically significant amount of time be spent at the desired frequency.

The frequency shifting hardware permits operation at two or more distinct clock rates, sufficiently similar to one another that the user and host computer can not detect the difference.

There are at least two frequency shifting hardware mechanisms which may be employed in touchpad systems such as the one disclosed herein. The first is to employ a small capacitor (e.g., about 50 pF) which will affect the frequency of the master oscillator providing the clock signal used by the state machine which controls sampling. By connecting one side of this capacitor to the appropriate circuit node on the oscillator and the other to an output line from a microprocessor, an open-collector type node, or the like, the effect of the capacitor can be turned on and off by an appropriate control signal as will be readily appreciated by those of ordinary skill in the art. By selecting the capacitor value depending on the oscillator circuit used, this method can cause a slight shift in operating frequency, slowing it by roughly 0.4%. According to a presently preferred embodiment of the invention, the ideal frequency shift distance is about one-half of one percent.

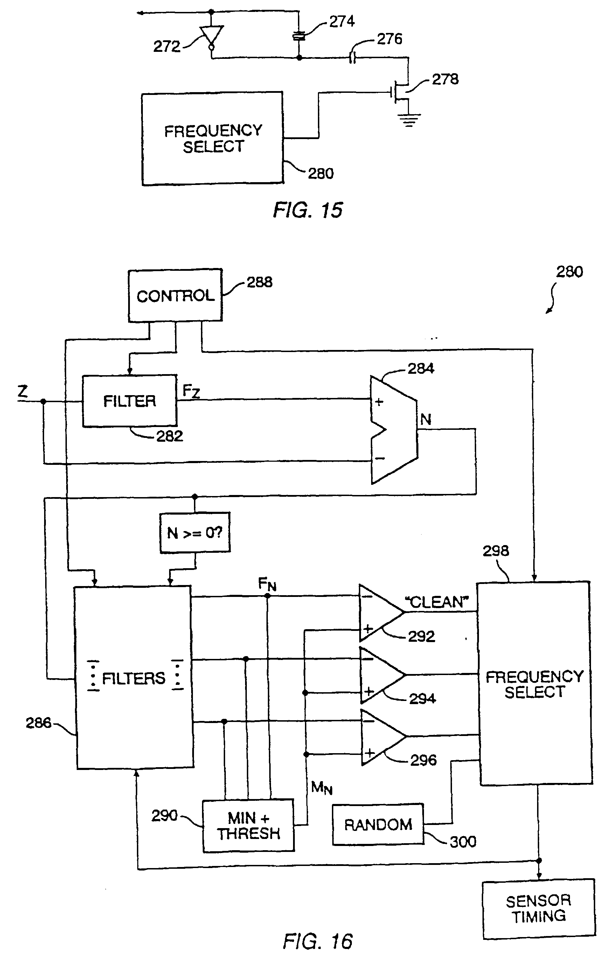

The use of such a capacitor to shift the frequency of an oscillator is shown in an illustrative circuit depicted in FIG. 15. An inverter 272 and ceramic resonator 274 form a conventional oscillator as is well known in the art. Ceramic resonators are similar to crystals in their use, but are only accurate to a fraction of a percent. By loading down the driven side of the ceramic resonator 274 with capacitor 276 it is possible to alter the oscillation frequency by a small amount. N-Channel MOS transistor 278 which, for example, may be found in an I/O port of a microprocessor, selectively connects the other end of capacitor 276 to a voltage reference such as ground. Control unit 280 determines whether or not to turn on N-Channel MOS transistor 278. When N-Channel MOS transistor 278 is turned on, capacitor 276 is grounded and loads down the oscillator, thus shifting its operating frequency. When N-Channel MOS transistor 278 is turned off, capacitor 276 is effectively removed from the circuit and the oscillator runs at full speed. It would be obvious to a person of ordinary skill in the art that this technique applies to any application in which the frequency of an oscillator is to be shifted by a small amount. This technique would also work with an RC oscillator.

In addition, it is possible to slow the sampling rate in several stages. This causes a more significant change in operating frequency and requires a more time consuming operation by the microprocessor. If neither of the pair of frequencies available using the capacitive shift are satisfactory, the sampling rate can be changed simply by adding "wait states" into the digital sequencer. Implementation of wait states is well known in the art. This effectively causes two new frequencies to become available to the other shifting method. The bracketed arrows in FIG. 5 show the variable charge up, charge down times produced by adding wait states into the operation of the digital sequencer.

While two methods for changing the scanning frequency of a touchpad system such as the one of FIG. 1 have been presented, those of ordinary skill in the art will recognize that other methods may also be used to adjust the scanning frequency and such methods are deemed to be within the scope of the present invention.

The method of the present invention can easily be expanded to an arbitrary number of operating frequencies. A more sophisticated algorithm according to the present invention can compensate for all the effects of frequency shifting on operation of the unit, and more advanced hardware could permit "previewing" other operating frequencies without actually affecting the normal touchpad sampling at all.

Referring now to FIG. 16, a schematic diagram of a circuit 280 for implementing the noise suppression feature of the present invention is presented. The present invention samples the scanning frequencies in alternation and keeps noise statistics on each scanning frequency. At any given time there will be one or more "clean" frequencies, whose noise is no greater than any other frequency's noise, and zero or more "dirty" frequencies which have noticeably more noise than the clean frequencies. (This will be defined more precisely below.)

As previously disclosed in the flow diagram of FIG. 14, the basic operation of the noise suppression feature of the present invention monitors the different frequencies when no finger is present, then, when a finger is detected, locks onto a clean frequency for the duration of the finger stroke.

To add immunity to switching-frequency noise, the frequency sequence is randomized. Such an implementation works as follows. When the system is operating at a dirty frequency at a present time, always switch to the next frequency next time. But if the system is operating on a clean frequency this time, only go on to the next frequency with 50% probability.

This randomizing technique also means there is a greater chance that, when the finger comes down, the system is already operating at a clean frequency and no switching needs to be performed again before locking.

According to a presently preferred embodiment of the invention, noise is measured as follows: Given a sequence of "Z" or denominator values $Z(t)$ (these values are stored in the denominator accumulators 152 and 156 of FIG. 8),

$$FZ(t) = alpha*Z(t) + (1-alpha)*FZ(t-1) \quad alpha \approx 0.1$$

computes a time-averaged version of the denominator,

$$N(t) = FZ(t) - Z(t) \text{ if } FZ(t) > Z(t)$$

$$N(t) = 0 \qquad \text{if } FZ(t) < Z(t)$$

computes a half-wave-rectified noise estimate for any given time sample, and

$$FN(t) = beta*N(t) + (1-beta)*FN(t-1) \quad beta \approx 0.1$$

computes a time-averaged version of this noise estimate. The $FZ(t)$, $N(t)$, and $FN(t)$ computations are carried out only when no finger is present.

Those of ordinary skill in the art will note that $FZ(t)$ can be the very same time-averaged denominator value used by the calibration algorithm ("Fz" at the output of filter 182 in FIG. 9). Recall that the calibration algorithm also wants to update its "Fz" value only when no finger is present.

The half-wave rectification ensures that only negative excursions of $Z(t)$ below the average $FZ(t)$ are counted as noise. This prevents slightly positive Z, e.g. due to a finger coming near the pad, from being misrecorded as noise.

In another variation useful according to the present invention,

$$N(t) = FZ(t) - Z(t)$$

$$FN(t) = beta*N(t) + (1-beta)*FN(t-1) \text{ if } N(t) >= 0$$

$$FN(t) = FN(t-1 ) \qquad \text{if } N(t) < 0$$

which is much the same as the preceding example, except that FN(t) is not updated at all when the FZ(t) < Z(t), rather than averaging in a zero as the first definition did.

A separate FN(t) is maintained for each frequency, and at any given time, the above equations are used to modify the FN(t) of the currently selected frequency. A frequency is "clean" if its FN(t) is not significantly greater than any other frequency's FN(t). "Significantly greater" can be taken to mean more than a certain threshold above another FN(t). So:

$$MN(t) = \text{minimum } FN(t) \text{ over all frequencies}$$

$$clean(t) = FN(t) < MN(t) + \text{threshold for any given frequency}$$

If the currently sampled frequency is "dirty", it is preferable to prevent FZ(t) from being updated based on the noisy Z(t), and to prevent the regular calibration, arithmetic, and gesture units from operating during that sample. (If a finger comes down, the device will lock onto a clean frequency on the next time step, so only one sample of useful finger data processing can be missed due to this rule.)

Because the gesture unit 20 of FIG. 1 is frozen while sampling a dirty frequency, and because the alternation between frequencies is randomized as described previously, the gesture unit may not be able to time the operation of gestures if the incoming data stream is used as its time base. Therefore, it is preferable to continue locking onto a clean frequency as long as any gesture processing is still in progress, even after the finger has left the pad.

Normally, at least one frequency will be noise-free, i.e., FN(t) < threshold. Occasionally there will be noise on all available frequencies, which means FN(t) > threshold even for so-called clean frequencies. When this happens, it has been found useful to employ a motion filtering algorithm to filter the final computed X,Y values more heavily. Heavy filtering produces a less responsive touchpad, but a less responsive touchpad is better than a jittery touchpad if there is no other choice. The "heavier" filtering can be accomplished in a variety of ways which are well known in the art.

Referring now to FIG. 16, a schematic diagram of a circuit 280 for implementing the noise suppression feature of the present invention is presented. The Z value is averaged by the filter 282 to produce FZ. Filter 282 may be the same filter as filter 182 with history buffer 184 of FIG. 9. The subtractor 284 computes FZ - Z to obtain the preliminary noise estimate N.

The preliminary noise estimate N is fed into a block of filters FN 286 , one filter per frequency. The current frequency being sampled is used to select which of the FN filters to operate on. The filter only operates if N >= 0, and if the control unit 288 determines that no finger is present.

The MIN unit 290 computes the minimum of all FN values and adds a certain small threshold. Persons of ordinary skill in the art will readily be able to configure such a MIN unit 290 and threshold for a given touchpad system design.

The comparators 292, 294, and 296 check, for each FN, whether FN exceeds the minimum plus the threshold. The output "clean" signal for a frequency is true if that frequency's FN does not exceed the minimum plus the threshold. Those of ordinary skill in the art will recognize that, while three filters and comparators are shown, other numbers of filters and comparators fall within the scope of the present invention.

The frequency selector 298 uses the "clean" values, plus a random bit signal from random unit 300, to decide which frequency to sample next. The frequency choice is forwarded to the sensor timing circuit (part of control block 56 of FIG. 3).

The frequency shifting algorithm and hardware of the present invention are intended to address the effects of electrical noise on touchpad operation. Before implementation of the present invention, if such noise was present at a frequency related to the operating frequencies of the analog sampling circuits of the touchpad, performance would be significantly affected. By making it possible to subtly shift the operating frequencies of the touchpad, its performance is dramatically improved. Whereas previously noise in any of several narrow frequency bands could make operation difficult or impossible, the touchpad may now function almost perfectly at all frequencies.

Another innovation of the present approach relates to the effective use of highly limited resources. According to a presently preferred embodiment of the invention a microprocessor provides a single output signal which controls which of the pair of possible operating frequencies is to be used. This information needs to be output continuously, or stored outside the processor in some fashion. The latter approach would require a hardware modification, and no unused output lines were available for the former. Instead, it is sufficient to use a data line whose other functions are not used at all times. That is to say, if a data line only actively transmits data 5% of the time, it is available the other 95% of the time. In a simple implementation where this line is the only output influencing the operating frequency, the original use (data transmission) causes random, rapid switching between the two operating frequencies 5% of the time, but the effect is small enough to permit both uses for the single data line to coexist.

While the noise detection and frequency shifting techniques disclosed herein have been disclosed in the context of a capacitive touchpad sensor system, those of ordinary skill in the art will readily recognize that these techniques are applicable to any system which periodically samples a signal in the presence of periodic noise.

While embodiments and applications of this inv.ention have been shown and described, it would be apparent to those skilled in the art that many more modifications than mentioned above are possible without departing from the inventive concepts herein. The invention, therefore, is not to be restricted except in the scope of the appended claims.

## Claims

1. A method for suppressing noise in a capacitive touch sensor which operates by scanning at one of a plurality of scanning frequencies a number of inputs associated with a touchpad, comprising the steps of:

   measuring the noise level at each one of said plurality of scanning frequencies; and
   setting the scanning frequency of the capacitive touch sensor to the one of said plurality of scanning frequencies having the lowest noise level.

2. A method according to claim 1 wherein said plurality of scanning frequencies comprises two frequencies which differ from each other in frequency by about 0.5%.

3. A method according to claim 1 or 2, further including the steps of:

   determining when a finger or other object is in contact with said touchpad; and
   inhibiting charging said scanning frequency when said finger or other object is in contact with said touchpad.

4. A method according to claim 3, further including the step of inhibiting changing said scanning frequency for a period of time after said finger or other conductive object has broken contact with said touchpad, said period of time being sufficient to allow completion of any one of a set of gestures.

5. Apparatus for suppressing noise in a capacitive touch sensor which operates by scanning at one of a plurality of scanning frequencies a number of inputs associated with a touchpad, comprising:

   means for measuring the noise level at each one of said plurality of scanning frequencies; and
   means for setting the scanning frequency of the capacitive touch sensor to the one of said plurality of scanning frequencies having the lowest noise level.

6. The apparatus of claim 5, further including:

   means for determining when a finger or other conductive object is in contact with said touchpad; and
   means for inhibiting changing said scanning frequency when said finger or other conductive object is in contact with said touchpad.

7. The apparatus of claim 6, further including means for inhibiting changing said scanning frequency for a period of time after said finger or other conductive object has broken contact with said touchpad, said period of time being sufficient to allow completion of any one of a set of gestures.

8. A method for suppressing noise in an electronic system which operates by periodically scanning one or more inputs at one of a plurality of scanning frequencies, comprising the steps of:

measuring the noise level at each one of said plurality of scanning frequencies; and
setting the scanning frequency to the one of said plurality of scanning frequencies having the lowest noise level.

9. The method of claim 8 wherein said plurality of scanning frequencies comprises two frequencies which differ from each other in frequency by about 0.5%.

10. Apparatus for suppressing noise in an electronic system which operates by scanning at one of a plurality of scanning frequencies a number of inputs, comprising:

means for measuring the noise level at each one of said plurality of scanning frequencies; and
means for setting the scanning frequency to the one of said plurality of scanning frequencies having the lowest noise level.

FIG. 1

30 30 30 30 30 30 30 30 30 30 30 30 30 30 30

34

32

22

24

*FIG. 2A*

24    28    34

26
26
26
26
26
26
26
26
26
26
26
26
26
26
26
26

22

*FIG. 2B*

FIG. 2C

FIG. 2D

FIG. 3

*FIG. 4A*

*FIG. 4B*

FIG. 5

FIG. 6

FIG. 7

FIG. 8

FIG. 9

FIG. 10

FIG. 11A

$$V_{SENSE} = f\left(C_{TOUCHPAD} + C_{FINGER}\right)$$

FIG. 11B

$$V_{SENSE} = f\left(C_{TOUCH} + C_{FINGER}\right) + V_N / \left(1 + \frac{C_{TOUCH}}{C_{FINGER}}\right)$$

FIG. 12

FIG. 13

FIG. 14

FIG. 15

FIG. 16

## EP 0 818 751 A1

European Patent Office

**EUROPEAN SEARCH REPORT**

Application Number

EP 97 30 4153

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO 96 18179 A (CIRQUE CORP)<br>* page 6, line 25 - page 7, line 9 *<br>* page 14, line 21-30 *<br>* page 16, line 12 - page 17, line 26 *<br>* figures 1,7,8 * | 1,5,8,10 | G06K11/16 |
| A | | 2-4,6,7,9 | |
| X | EP 0 589 498 A (PHILIPS ELECTRONICS NV)<br>* column 8, line 3-56 * | 1,5,8,10 | |
| A | | 2-4,6,7,9 | |
| X | US 4 794 208 A (WATSON JAMES S)<br>* column 4, line 44 - column 5, line 45 * | 1,5,8,10 | |
| A | | 2-4,6,7,9 | |
| A | US 4 922 061 A (MEADOWS R DAVID ET AL)<br>* column 2, line 27 - column 3, line 11 * | 1,5,8,10 | |
| | | | TECHNICAL FIELDS SEARCHED (Int.Cl.6) |
| | | | G06K |

The present search report has been drawn up for all claims

| Place of search | Date of completion of the search | Examiner |
|---|---|---|
| THE HAGUE | 13 November 1997 | Baldan, M |

EPO FORM 1503 03 82 (P04C01)